# EUROPEAN PATENT APPLICATION

(11) **EP 0 809 103 A2**
(43) Date of publication of application: **26.11.1997**
(21) Application number: 97302211.4
(22) Date of filing: 01.04.1997
(51) Int. Cl.: G01N 27/447, C12Q 1/68

(54) **Stable denaturants for use in electrophoretic techniques and methods of using the same**

(30) Priority: 28.03.1996 US 627941; 21.03.1997 US 826091
(71) Applicant: FMC CORPORATION, Philadelphia, PA 19103 (US)
(72) Inventor: Michaels, Alan, Chestnut Hill, Maine 02167 (US); Ostrovsky, Mikhail, Rockland, Maine 04841 (US); Burland, Timothy, Rockport, Maine 04856-4842 (US); Kusukawa, Noriko, Camden, Maine 04843 (US)
(74) Representative: Hamilton, Raymond

(57) **Abstract**

This invention presents, *inter alia,* a class of high power denaturants that are stable in aqueous environments and can be used in electrophoretic techniques such as DNA sequencing and related techniques. The denaturants and electrophoretic media of the invention provide a basis for the high resolution analysis of biological molecules. The denaturants of the invention are also believed to be suitable for electrophoresis of DNA, RNA, proteins, and other macromolecules.

## Description

This invention presents, *inter alia,* a class of high power denaturants that are stable in aqueous environments and can be used in electrophoretic techniques such as DNA sequencing and related techniques. The denaturants and electrophoretic media of the invention provide a basis for the high resolution analysis of biological molecules. The denaturants of the invention are also believed to be suitable for electrophoresis of DNA, RNA, proteins, and other macromolecules.

Electrophoresis is a well known technique for separating biological molecules based on molecular size, shape, and/or ionic charge under the influence of an electrical potential gradient. This type of molecular separation is commonly performed with electrophoretic matrices or media that are either polyacrylamide gels or agarose gels. *See, e.g.,* Molecular Cloning, Sambrook, Fritsch & Maniatis (Cold Spring Harbor Laboratory Press (2d ed. 1989)); Harper *et al.,* U.S. Patent No. 5,455,344, the disclosures of which are herein incorporated by reference in their entirety.

Certain electrophoretic separations of DNA molecules result in sequencing ladders, which are patterns of the fragments of single-stranded DNA that migrate through the electrophoresis medium at a rate reflecting their molecular size. *See, e.g.,* F. Sanger, S. Nicklen, A. Coulson, *Proc. Natl. Acad. Sci.* 1977, 74, 5463-5467, the disclosures of which are herein incorporated by reference in their entirety. Each set of ladders comprises fragments of a series related by primary nucleotide sequence and differing in length by increments of one nucleotide residue; these fragments are complementary in sequence to the DNA template. However, sequence compressions can be a problem in such techniques. Sequence compressions are typically regions of a sequencing ladder where two or more DNA fragments of different length display indistinguishable electrophoretic mobilities. Compressions can lead to ambiguities in determining the sequence of the DNA template. *See, e.g., Topics in DNA Sequencing: Monograph II, Sequencing Gel Compressions,* United States Biochemical Inc., the disclosures of which are herein incorporated by reference in their entirety. In some cases, one or more nucleic acid fragments may migrate faster than one or more other fragments of the same series that are one or more nucleotides shorter; this phenomenon has been called both sequence "inversion" and compression. Compressions and/or inversions occur most commonly but not exclusively in G-C-rich regions at the 3' ends of sequencing fragments. This pattern of anomalous migration is considered to result when certain nucleic acid fragments retain residual secondary structure under conditions where other nucleic acid fragments are more fully denatured. Such conditions include electrophoresis through 6% polyacrylamide crosslinked with bisacrylamide (also called N,N'-methylene bisacrylamide, or bis) gels containing 8M urea at 40-50°C. Some compressions and/or inversions can be resolved by replacing dGTP with 7-deaza-GTP in sequencing reactions; replacing dGTP with dITP typically resolves still more compressions and/or inversions, but can give rise to artifactual terminations in the sequencing reactions that themselves lead to ambiguities in calling the correct sequence. To circumvent the inadequacies and problems associated with such techniques, there is a need for more effective denaturation in electrophoresis that would restore relative electrophoretic mobilities so that all nucleic acid fragments migrate in order of their length in nucleotides.

DNA sequencing gels and other denaturing electrophoretic media commonly contain urea and formamide and derivatives as denaturants. *See, e.g.,* Sambrook, et. al., *supra.* In DNA sequencing, the denaturant is used to separate the two strands of DNA into single-stranded form, and to attempt to abolish other secondary structures so that electrophoretic migration reflects only the molecular size of the DNA strands. Urea and formamide, however, have disadvantages such as instability *(e.g.,* poor shelf-life) in aqueous environments, and relatively low denaturing power. The poor stability of urea and formamide and their derivatives limits their use in pre-cast gels and pre-mixed gel solutions. Their instability also limits their use in electrophoresis procedures of long duration, or in electrophoresis procedures that use higher temperatures than the typical circa 45°C. These and other commonly-used denaturants suffer from chemical instability, which can be caused by several mechanisms: hydrolysis, oxidation, or reduction. Other mechanisms of instability of the denaturants in a gel formulation can be caused by loss of the denaturant by crystallization or evaporation, or interactions of the denaturants with the matrix components potentially interfering with the electrophoresis process. The limited denaturing power of urea, formamide, and their derivatives leads to compression/inversions so that gels with these denaturants do not always fully resolve DNA fragments, which potentially leads to inaccurate electrophoretic patterns.

Others have investigated the use of urea in other matrices in an attempt to improve its denaturing power and the ability of the matrix to separate macromolecules. *See, e.g.,* Sugihara Mitsuru *et al.,* Japanese Patent 62272146 A2 (November 26, 1987). Others have investigated formamide-based techniques as a means to improve resolution and denaturation. PCT international application WO 94/23,092 (October 13, 1994) inventor Fuller *et al* discusses the incorporation of a mixture of ethylene glycol and formamide into polyacrylamide (PAA) gels to denature DNA for electrophoretic analysis. However, ethylene glycol has limited denaturing power, as discussed below, and formamide and its derivatives are unstable, thus, this technique is an unacceptable alternative.

Modifications have been made to the electrophoretic matrix in an attempt to improve the resolution of biological molecules, such as DNA, in electrophoretic systems. U.S. Patent No. 5,354,442, issued to Allen *et al.* (October 11, 1994). Allen describes the incorporation of different alcohols and polyols as matrix modifiers, rather than denaturants, in electrophoretic sequencing gels. Allen teaches that the addition of such matrix-modifiers in combination with sulfate, chloride, or phosphate ions at a pH between 6 and 9 may improve the resolution of the nucleic acids. Allen does not claim that these additives act as denaturants, and it is denaturation that is particularly important for some electrophoretic applications.

Others have incorporated polymeric alcohols, polymeric sugars, polymeric amines, peptides, polymeric ethers, gums, detergents, and mixtures thereof to the sequencing gel to modify the matrix. *See, e.g.,* Starr, PCT application number WO 95/07458 (March 16, 1995). This PCT application teaches that adding these particular polymeric modifiers to the matrix is useful in restricting the diffusion of water between a stacking gel and a resolving gel. Again, the matrix modifiers are not intended nor do they assist in denaturation of the macromolecule.

The use of sodium dodecyl sulfate and polyoxyethylenes as DNA denaturants in electrophoresis gels and the influence of pH on the denaturing power of electrophoretic systems have been examined. *See, e.g.,* Shorr *et al.,* U.S. Patent No. 5,055,517 (October 8, 1991). However, the Shorr denaturants have insufficient denaturing power and have limited applications in polyacrylamide gels, which are unstable at the disclosed high pH.

United States Patent No. 5,455,344 issued to Harper *et al* (October 3, 1995) (assigned to a common assignee) describes a gel medium for electrophoresis that comprises a polysaccharide, preferably agarose in the presence of denaturing agents. This reference is only directed to a limited class of denaturants (urea, formamide, C₂-C₄ glycols, glycerol, DMSO, pyrrolidinone, and C₁₋₆ alkyl pyrrolidinone), many of which have limited denaturing power or poor stability. The disclosed denaturants are limited to electrophoretic techniques using agarose.

EPO application number 497 448 A1 (August 5, 1992) discloses the use of non-urea denaturants for capillary gel electrophoresis. The denaturing agents are characterized by an amide moiety for interrupting hydrogen bonding and a moiety capable of disrupting base pairing. However, amides tend to be unstable in an aqueous environments which limits their use in electrophoresis techniques.

A variety of other denaturants for DNA have been studied in solution. *See, e.g.,* L. Levine, J. Gordon, W. Jencks, *Biochemistry,* **1963**, 2, 168-175. These studies were focused on denaturing double-stranded DNA in free solution. The stability of the denaturants in aqueous environments or their compatibility with gel and non-gel electrophoretic media was not investigated. Further, certain of the denaturants discussed therein are either unstable or incompatible with certain gel matrices, which would make them unacceptable for certain electrophoretic techniques.

Still others have taught the use of non-gel polymer systems for electrophoresis in capillaries and micro-channels. In such techniques, because of the small diameter of the channel, it is possible to use a liquid polymer solution rather than a gel. A wide variety of chemically different polymers of very diverse molecular weight have been shown to separate macromolecules by such techniques (an extensive but not exhaustive list is disclosed by Kleparnik *et al., Electrophoresis* **1995*,*** *16,* 366-76). These methods do not obviate the need for denaturation in techniques such as DNA sequencing. Urea has been used as a denaturant for DNA sequencing in solutions of polyethylene oxide polymers and uncrosslinked polyacrylamide as the separation matrix. *See, e.g.,* Fung & Yeung, *Anal. Chem.,* **1995**, 67, 1913-1919; Ruiz-Martinez *et al., Anal. Chem.* **1993**, 65, 2851-2858, respectively. However, the problems observed with urea in gel electrophoresis are also present here, such as poor stability and limited denaturing power.

Thus, there still remains a need for stable, high power denaturants that are compatible with both gel and non-gel electrophoretic techniques, that do not significantly harm the integrity of the electrophoretic matrix, and that provide high electrophoretic resolution. The present invention meets these as well as other needs.

This invention presents, *inter alia,* a class of denaturants intended for use in electrophoretic techniques, such as gel and non-gel electrophoresis, capillary electrophoresis, and micro-channel electrophoresis. The denaturants of the invention are chemically stable, can be dissolved in water with or without cosolvent, have high denaturing power, and provide for the high resolution of macromolecules in various electrophoretic systems. As these denaturants have good stability in aqueous environments, they are particularly useful for pre-cast gels, and pre-mix solutions for gel and non-gel electrophoretic separations. The denaturants of the invention are small molecules with a molecular weight below about 400 and are compatible with electrophoretic matrices, in that they do not damage the integrity of the electrophoretic system. This invention is the first to present and identify such stable, matrix compatible, high power denaturant agents and to incorporate them into electrophoretic systems for the analysis of macromolecules.

The denaturants of the invention are particularly useful for DNA sequencing, but are also believed to be useful in other electrophoresis techniques such as gradient or non-gradient denaturing electrophoresis for DNA, RNA, proteins, other macromolecules, and mixtures thereof.

The inventors discovered that denaturants having high denaturing power could either be found experimentally or predicted by a theoretical calculation (to yield an L value). It has been found that the calculated results correlate with experimentally generated data. Consistent with this discovery, compositions for the electrophoretic resolution of biological macromolecules are presented. The electrophoretic compositions of the invention comprise about 2 to about 95 wt.%, based on the total weight of the composition of one or more denaturants having an L value of at least 2; and about 5 to about 98 wt.%, based on the total weight of the composition, of an electrophoretic medium. The denaturants of the invention also will have water solubility in excess of about 0.1% by weight (without the aid of a cosolvent) and 4% by weight (with the aid of a cosolvent) and a molecular size of less than about 400 daltons.

The inventors discovered that compounds having L values of at least 2 can be selected from substituted aliphatic compounds having between about 1 to about 25 carbon atoms; substituted aromatic compounds having between about 6 to about 25 carbon atoms; substituted aliphatic alcohols having between about 3 to about 25 carbon atoms; unsubstituted aliphatic alcohols having between about 4 to about 25 carbon atoms; substituted aromatic alcohols having between about 7 to about 25 carbon atoms; unsubstituted aromatic alcohols having between about 7 to about 18 carbon atoms; substituted aliphatic acids having between about 4 to about 25 carbon atoms; unsubstituted aliphatic acids having between about 4 to about 18 carbon atoms; substituted aromatic acids having between about 7 to about 25 carbon atoms; unsubstituted aromatic acids having between about 7 to about 18 carbon atoms; substituted or unsubstituted ketones having between about 3 to about 25 carbon atoms; substituted or unsubstituted ethers having between about 4 to about 25 carbon atoms; substituted or unsubstituted ether alcohols having between about 4 to about 25 carbon atoms; substituted or unsubstituted keto-alcohols having between about 4 to about 25 carbon atoms; substituted or unsubstituted aliphatic sulfides having between about 1 to about 25 carbon atoms; substituted or unsubstituted aliphatic sulfones having between about 2 to about 25 carbon atoms; substituted or unsubstituted diols having between about 5 to about 25 carbon atoms; substituted or unsubstituted heterocyclic amines having between about 4 to about 25 carbon atoms; substituted or unsubstituted alkyl pyrrolidones having between about 5 to about 25 carbon atoms; substituted or unsubstituted alkyl pyrrolidones having between about 5 to about 25 carbon atoms in combination with alcohols; substituted or unsubstituted aliphatic sulfoxides having between about 2 to about 20 carbon atoms in combination with alcohols; substituted or unsubstituted cyclic alkyl pyrrolidones having between about 8 to about 25 carbon atoms; substituted or unsubstituted phenols having between about 6 to about 25 carbon atoms; and combinations thereof; provided that the denaturant is not n-butanol or dimethylsulfoxide alone (DMSO may be used as a cosolvent as discussed *infra),* provided that when the electrophoretic medium comprises polysaccharides and polysaccharide derivatives, the denaturant is not pyrrolidone or C₁-C₆ alkylpyrrolidone, and when the electrophoresis system is acrylamide-based gel system, the denaturant is not benzyl alcohol.

The denaturing agents of the invention may be used in, *inter alia,* gel electrophoretic techniques using, for example, polysaccharide-based or acrylamide-based gels, as well as non-gel electrophoretic techniques, using for example, polymer solutions used in, *inter alia,* capillary and micro-channel devices. The denaturing agents and compositions of the invention are particularly useful in forming pre-cast gels and pre-mix solutions of electrophoretic media.

The invention will be further described, by way of example only, with reference to the following figures in which:-

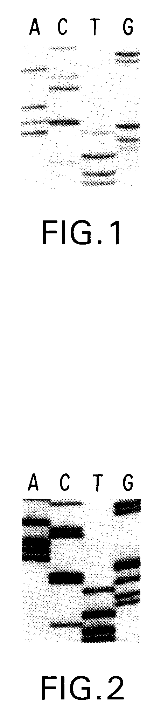

Figure 1 is a photograph showing the electrophoretic separation of DNA sequences in a 6%, 19:1 weight ratio polyacrylamide: bis gel with 8M urea as the denaturant. DNA samples were prepared as described in the USB Handbook, *supra,* using M13mp18 with dGTP. In Figure 1, the sequence of the compression portion of SEQ. ID No. 1 reads as TTCTGGTAGCA.

Figure 2 is a photograph of the electrophoretic separation of DNA sequences in a 6%, 19:1 weight ratio polyacrylamide: bis gel with 8M urea as the denaturant. DNA samples were prepared as described in the USB Handbook, *supra,* using M13mp18 with 7-deaza GTP. In Figure 2, the sequence of the compression portion of SEQ. ID No. 1 reads as TTCTGGTGCCGAAA.

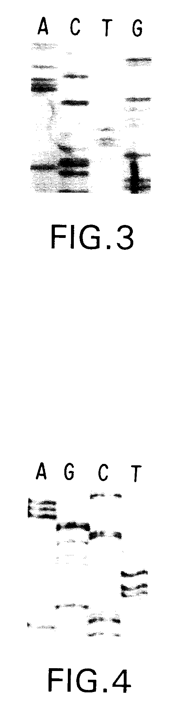

Figure 3 is a photograph of the electrophoretic separation of DNA sequences in an agarose gel prepared according to the formula of Gel IV, Example 1, with samples prepared as for Figure 1. In Figure 3, the sequence of the compression portion of SEQ. ID No. 1 reads as TTCTGGTGCAAA.

Figure 4 is a photograph of the electrophoretic separation of DNA sequences in a N,N-dimethylacrylamide gel prepared according to the formula of Gel XXII, Example 3, with samples prepared as for Figure 1. In Figure 1, the sequence of the compression portion of SEQ. ID No. 1 accurately reads as TTCTGGTGCCGGAAA.

In the context of this invention, the term "aliphatic" refers to any carbon-hydrogen containing compounds having either saturated or unsaturated bonds (alkanes, alkenes, alkynes). Such compounds may be cyclic or acyclic, straight or branched chains, and may further be substituted with hetero atoms *(e.g.,* O, S, N).

The term "aromatic," as used herein, refers to any compound that contains at least one benzene ring. The term "aryl," as used herein refers to a compound having at least one benzene radical or benzene ring, and may be substituted. Also included within this definition are structural isomers *(e.g.,* chain isomers, position isomers, and functional isomers) and stereoisomers *(e.g.,* enantiomers and diasteriomers).

As used herein, the term "alkyl" refers to radicals that are formed from the loss of a hydrogen from an alkane (CₙH₂ₙ₊₂). The alkyl compounds may be straight or branched chain compounds, cyclic or acyclic, and further substituted with hetero atoms (*e.g.,* O, S, N). Also included within this definition are structural isomers *(e.g.,* chain isomers, position isomers, and functional isomers) and stereoisomers *(e.g.,* enantiomers and diasteriomers).

The term "alkoxy," as used herein, is used in its conventional sense and refers to, generally, alkyl radicals attached to a molecule through an oxygen. Alkyl radicals are generally derived from an aliphatic hydrocarbon by removal of one hydrogen atom. It is contemplated that the alkoxy compounds of the invention may be further substituted. Also included within this definition are structural isomers (*e.g.,* chain isomers, position isomers, and functional isomers) and stereoisomers (*e.g.,* enantiomers and diasteriomers).

As used herein, the term "phenoxy" is used in its conventional sense and refers to, generally, phenyl radicals attached to a molecule through an oxygen. It is contemplated that the phenoxy compounds of the invention may be further substituted. Also included within this definition are structural isomers (*e.g.,* chain isomers, position isomers, and functional isomers) and stereoisomers (*e.g.,* enantiomers and diasteriomers).

As used herein, "alcohols" refers to aliphatic or aromatic compounds that have a hydroxyl group (OH) bonded to a carbon atom (monohydric alcohols). Alcohols that contain more than one hydroxyl group per molecule, provided each group of hydrogen and oxygen atoms is attached to a different carbon atom, are referred to as polyhydric alcohols or polyols. "Glycols," as used herein, are dihydric alcohols having more than one hydroxyl group attached to different carbon atoms. The alcohol compounds may be straight or branched chain compounds, cyclic or acyclic, and further substituted with hetero atoms (*e.g.,* O, S, N). Also included within this definition are structural isomers (*e.g.,* chain isomers, position isomers, and functional isomers) and stereoisomers *(e.g.,* enantiomers and diasteriomers).

"Amine" compounds, as used herein, refers to aliphatic or aromatic compounds that have attached thereto a NH2 moiety. Amine compounds may be straight or branched chain compounds, cyclic or acyclic, and further substituted with hetero atoms (*e.g.,* O, S, N). Also included within this definition are structural isomers *(e.g.,* chain isomers, position isomers, and functional isomers) and stereoisomers (*e.g.,* enantiomers and diasteriomers).

"Ether" compounds, as used herein, is used in its traditional sense to refer to compounds in which an oxygen atom is bonded to two organic radicals, R-O-R. The ether compounds may be straight or branched chain compounds, cyclic or acyclic, and further substituted with hetero atoms (*e.g.,* O, S, N). Also included within this definition are structural isomers (*e.g.,* chain isomers, position isomers, and functional isomers) and stereoisomers (*e.g.,* enantiomers and diasteriomers).

"Ketones," as used herein, are used in their conventional sense to refer to any organic compounds that contain a carbonyl group (an oxygen atom doubly bonded to a carbon atom) bonded to two other organic groups. The ketone compounds may be straight or branched chain compounds, cyclic or acyclic, and further substituted with hetero atoms (*e.g.,* O, S, N). Also included within this definition are structural isomers *(e.g.,* chain isomers, position isomers, and functional isomers) and stereoisomers (*e.g.,* enantiomers and diasteriomers).

The terminology, "heterocyclic amines," refers to aliphatic compounds having a ring structure that incorporates other atoms in addition to carbon atoms. Heterocyclic amines include, without limitation, pyrrole and its derivatives, imidazole and its derivatives, pyridine and its derivatives, pyrimidine and its derivatives, qunioline and its derivatives, piperidine and its derivatives, pyrrolidone and its derivatives, purine and its derivatives, pyrrolidine and its derivatives, and morpholine and its derivatives. Derivatives refers to compounds having the core heterocyclic structure (*e.g.,* pyrrole) substituted with one or more of an aliphatic moiety, aromatic moiety, alkoxy moiety, phenoxy moiety, amine moiety, nitro moiety, nitrile moiety, halogens, or hetero atoms.

The term "substituted," as used herein refers to single or multiple substitutions of a molecule with a moiety or moieties distinct from the core molecule. Substituents include, without limitation, halogens, hetero atoms, nitro moieties, amine moieties, nitrile moieties, hydroxy moieties, alkoxy moieties, phenoxy moieties, other aliphatic or aromatic moieties. Substituted compounds may be referred to as derivatives of the core structure.

The term "biological molecule," as used herein refers to any molecule capable of being separated by electrophoresis or analyzed by analogous techniques. It includes, without limitation, DNA, RNA, proteins, peptides, oligo- and polysaccharides, lipids, conjugates, and mixtures thereof, whether natural or synthetic. This terminology may be used interchangeably with the terms "analyte" and "macromolecule."

The terminology, "separation matrix components," includes any of the components necessary to form an electrophoretic medium, including without limitation, acrylamides, acrylamide derivatives, other crosslinkers, catalysts, initiators, polysaccharides, photoinitiators, gelling and non-gelling additives, and buffers, without limitation.

The terminology "compatible with a gel matrix and components," as used herein in the context of denaturants, refers to denaturants that do not prevent gelation or polymerization, do not display substantial syneresis, do not substantially suppress the polarity of the aqueous phase to cause intermolecular aggregation or precipitation of the matrix-forming polymers, and retain sufficient denaturing power to achieve satisfactory resolution of sequencing reactions.

The terminology, "electrophoretic medium," refers to any gel or non-gel vehicle that is used for the electrophoretic separation of macromolecules. Such media include gels and solutions made from separation matrix components, as defined above.

The terminology, "electrophoretic system," refers to the high power denaturants of the invention in combination with an electrophoretic medium and includes, without limitation, pre-cast electrophoretic gel plates or stable pre-mix solutions for gel and non-gel electrophoretic techniques.

The terminology, "stable denaturant," as used herein, refers to denaturants that have a negligible rate of hydrolysis, or oxidation or reduction in aqueous environments.

The terminology "cosolvent," as used herein refers to any solvent that in conjunction with one or more solvents can dissolve a solute.

When the terminology "-based" is used in connection with a molecule or compound it refers to molecules having the core structure of the compound preceding the terminology "-based."

Other than in the examples,or where otherwise indicated, all numbers expressing quantities of ingredients or other parameters of the invention are understood to be modified by the term "about."

This invention involves the selection and presentation of a class of stable, high power denaturing agents that facilitate high electrophoretic resolution of biological macromolecules. Electrophoretic compositions and methods of using the same are also presented. Kits incorporating the novel compositions of the invention are also within the scope of the invention.

It is contemplated that the denaturants of the invention can be used in a variety of electrophoretic techniques, including gel and non-gel electrophoresis, capillary electrophoresis, and micro-channel electrophoresis. When the denaturants of the invention are used in gel electrophoresis, the gel can be, for example, based on polysaccharide and its derivatives and/or acrylamide and its derivatives. Useful aqueous gel-forming polysaccharides include, without limitation, agarose; glucomannan, especially glucomannan derived from konjac; partially deacetylated glucomannan; beta-1,3-glucans including curdlan; beta-carrageenan; furcellaran; agar (agar-agar); chemical derivatives of the foregoing; and mixtures thereof. The chemical derivatives should be of a low degree of substitution, preferably less than two substituents per disaccharide unit, and the substituent moieties should be fairly small, especially less than about 200 daltons. The polymers include polysaccharides with reactive groups, that will form irreversible gels, as well as thermoreversible gels that remelt on heating or alternatively on cooling. Preferred gel-forming polysaccharides include agar, agarose, allylglycidyl agarose, curdlan, hydroxyethyl curdlan, konjac glucomannan, and deacetylated konjac glucomannan; of which agarose, allylglycidyl hydroxyethyl curdlan, and deacetylated konjac glucomannan are more preferred, and agarose extracted from Pterocladia or Gelidium or Gracelaria species of seaweed is most preferred. *See, e.g.,* United States Patent No. 5,455,344, the disclosures of which are herein incorporated by reference in their entirety. Other gel and non-gel electrophoretic media known to those skilled in the art may be used without departing from the spirit of the invention.

Acrylamide-based systems for practicing the invention include acrylamide and related acrylamide compounds such as N,N-dimethylacrylamide, N-methylacrylamide, N-methylolacrylamide, piperazine diacrylamide, N,N'-diallyltartardiamide, N-acryloylaminoethoxyethanol, N-acryloyl tris(hydroxymethyl) aminomethane N-methylolacrylamide, as well as those disclosed in United States Patent Nos. 5,055,517 and 5,219,923, the disclosures of which are herein incorporated by reference in their entirety. For the purposes of this invention, the terms "acrylamide and related acrylamide compounds" "acrylamide derivatives" and "acrylamide-based systems" do not include isopropylacrylamide, diacetone acrylamide or N-tris(hydroxy)methyl acrylamide. Preferred acrylamides are acrylamide, N-methylacrylamide, N-methylolacrylamide, and N,N-dimethylacrylamide. Preferred acrylamide-based systems comprise acrylamide and N,N'-methylene bisacrylamide, N,N-dimethylacrylamide and N,N'-oxydimethylenebisacrylamide (also called bisacrylamide methylether, and bis(acrylamidomethyl)ether or are formed using the Long Ranger gel solution (which is a 50% stock solution of acrylamide monomer, comonomer and crosslinker, supplied by FMC Corp.). Other gel and non-gel electrophoretic media known to those skilled in the art may be used without departing from the spirit of the invention.

When the denaturants of the invention are used in non-gel capillary or micro-channel electrophoretic techniques, the liquid that acts as a separation medium can be a solution. This includes, without limitation, uncrosslinked polyacrylamides or polymers of acrylamide derivatives, polyethylene oxide, cellulose derivatives, or other polysaccharides. Persons skilled in the art would be familiar with the components of such media, and any such components known to those skilled in the art may be used without departing from the spirit of the invention.

The denaturants of the invention may be used in a variety of applications for, *inter alia,* denaturing biological molecules. Consider the case of the denaturing of DNA as an example of the denaturation of a biological molecule. There are three types of intermolecular forces in nucleic acids that must be overcome if adequate denaturation is to be achieved. The first is dispersion (hydrophobic) forces between apolar components of the DNA such as stacked base pairs which exhibit relatively poorer affinity for the surrounding water molecules than do water molecules for each other. The second is hydrogen bonds between bases that maintain alignment of the two strands and support the helix, or maintain intra-molecular secondary structures, such as "hair-pin" or "loop" structures. The third is electrostatic interaction, attributable to oppositely-charged ionic moieties attached to the polymer backbone, which are weakened in the presence of solvent media such as water, or in the presence of moderate concentrations of simple electrolytes. Out of these three forces, experimental and theoretical data suggest that the dispersion forces have major responsibility for renaturation of nucleic acids during electrophoresis.

The denaturing agents of the invention are effective in the elimination or minimization of these non-covalent forces so that the DNA molecules are devoid of such conformational constraints, and thus free to migrate in solution as single, flexible entities: a prerequisite for effective resolution in electrophoretic techniques.

The high power denaturing agents of the invention are a class of compounds that have an "L" value of at least 2 (1 being defined as the L value of a control formamide (a prior art denaturant)). The L for a compound has been found to be a good predictor of the behavior of compounds in terms of denaturing power. While the L value is directed to liquid organics, the L value for solid organics may be estimated based on a liquid counterpart to the solid compound (*e.g.,* compounds having similar core structures and substituents). The L value is defined as (δ²_{d}V/R)ₓ/(δ²_{d}V/R)_{FA} (Equation 1), where X defines the denaturant and FA is the reference compound formamide. The degree of denaturation (K) of DNA in a regular solution (the fraction of DNA molecules in single-stranded form) can be described as In K=(δ²_{d}V/R)[(1/Tm)-(1/T)] (Equation 2). Tm is the DNA melting temperature (°K (degrees Kelvin)), T is the temperature of experiment (°K), R is the universal gas constant, δ_{d} is dispersion or non-polar cohesion parameter of a denaturant in solution, and V is the molar volume of a denaturant.

Equation 2 shows that when T=Tₘ, then In K = 0 or 50% DNA denaturation. Increases in T and δ²_{d}V values lead to increases in degree of denaturation. Increases in denaturant concentration lead to decrease in Tm and to a corresponding increase in degree of denaturation.

In addition the empirical Marmur-Schildkraut-Doty equation, Tₘ= 193.7-(3.09-F_{GC})(34.64-2.83 In [Na+]),°C (Equation 3), where the fraction of bases, Fgc=((g+c)/(a+t+c+g)) (where a is adenosine, t is thymidine, c is cytosine, and g is guanosine) demonstrates that an increase in gc content in DNA or [Na⁺] in a denaturing system leads to a decrease in K. For DNA with a higher gc content, a higher temperature and/or denaturant concentration or choice of stronger denaturant with higher δ²_{d}V value, is required.

The term in square brackets in Equation 2 reflects the influence of temperature (T) during denaturation, and melting temperature of DNA (Tm) on K (degree of denaturation). The Tm, according to Equation 3, is a function of buffer composition ([Na⁺] is an example), DNA structure (F_{gc}), etc. The term (δ²_{d}V/R) in Equation 2 reflects the property of a denaturant only. Increase in the value of this term corresponds to increase in denaturing power of an additive. Thus, δ²_{d}V/R value can be used for comparative evaluation of different additives as denaturants.

The inventors derived and used the criterion, L, defined above, for definition of the relative denaturing strength of an additive "X" in solutions using δ²_{d}V/R value for formamide (FA) as a reference. The inventors selected those denaturants that have an L value of at least 2 which are theoretically stronger denaturants than formamide. The inventors recognized that stability, aqueous solubility and the molecular size of the denaturants are also considerations in evaluating denaturants. The inventors thus selected denaturants that are reasonably resistant to hydrolytic, oxidative, or reductive decomposition in the presence of other components in the media, and at the temperature of storage and/or use. Organic compounds containing amide or carboxylic ester linkages fail to meet this requirement.

The denaturants of the invention display adequate solubility in water at ambient temperature, either alone or in combination with water-miscible cosolvents, to a concentration suitable for denaturation commensurate with satisfactory electrophoretic resolution of macromolecules. Organic compounds with water solubilities in excess of about 0.1% by weight (without the aid of a cosolvent) are useful (based on the total weight of the composition); those with solubilities in excess of 4% by weight are preferred (based on the total weight of the composition). Compounds of relatively low molecular weight (preferably under 400 Daltons) are preferred.

Also, it is required that the denaturants for this invention do not dramatically alter the morphological and electrical properties of the electrophoresis medium that are essential to the discriminatory capability of the electrophoretic system. Denaturants that can function as radical scavengers, chain terminators, or radical transfer agents should not be used at too high concentration in gelling systems that require *in situ* polymerization. These compounds include, primary and secondary amines, sulfides, and other sulfur-bearing compounds in which sulfur is present in its lower-valence states, compounds containing olefinic or acetylenic linkages, halogenated organic compounds, and compounds containing tertiary carbon-hydrogen bonds.

The invention presents classes of compounds that meet, *inter alia,* the above-identified criteria. The aliphatic denaturants of the invention include, without limitations, alkanes substituted with amines such as n-propylamine, n-butylamine, 1-butanamine, diethylenetriamine, di-n-propylamine, and cyclohexylamine; alkanes substituted with sulfur moieties such as dimethyl sulfone, tetramethylene sulfone, and butadiene sulfone. Aliphatic acid denaturants of the invention include, without limitation, alkane acids such as 1-butanoic acid. Aliphatic alcohol denaturants of the invention include, without limitation, alkane-based monohydric alcohols such as tert-amyl alcohol, isobutyl alcohol, tert-butyl alcohol, sec-butyl alcohol, 2-ethyl-1-hexanol, 2-octanol, 1-pentanol, 1,3,-dimethyl 1-butanol, 2-ethyl-1-butanol, oleyl alcohol 3-chloropropanol, cyclohexanol; and dihydric alcohols (glycols) such as ethylene glycol monoethyl.

Substituted aromatic denaturants of the invention include, without limitation, nitrobenzene, aniline, methylaniline, benzyl amine, quinoline (double aromatic ring), and benzonitrile (triple bond). Aromatic alcohol and phenol-based denaturants of the invention include, without limitation, benzyl alcohol, phenol, nonyl phenoxy ethanol 1,3 benzenediol, m-cresol (3-methylphenol), and o-methoxyphenol. Aromatic acid denaturants of the invention include, without limitation, benzoic acid.

Ether denaturants of the invention include, without limitation, ethylene glycol monomethyl ether, ethylene glycol monobutyl ether, diethylene glycol monoethyl ether, diethylene glycol monomethyl ether, and 1,4, dioxane. Ether alcohols suitable for practicing the invention include, without limitation, tetrahydrofurfuryl alcohol.

Ketone denaturants of the invention include, without limitation, diethyl ketone, methyl isobutyl ketone, mesityl oxide, cyclohexanone, methyl isoamyl ketone, isophorone, acetophenone, di-(isobutyl) ketone. Keto-alcohol denaturants of the invention include, without limitation, diacetone alcohol.

Heterocyclic amine denaturants of the invention include, without limitation, pyridine, piperidine, piperidone, methyl piperidine, methylpiperidone, pyrrolidone, hydroxyethyl pyrrolidone, piperazine, hydroxyethyl piperazine, 2-pyrrolidone, N-methyl-2-pyrrolidone, N-ethyl-2-pyrrolidone, N-cyclohexyl-2-pyrrolidinone, 5-methoxy-2-pyrrolidone, hydroxyethyl pyrrolidine, morpholine, methyl morpholine, hydroxyethyl morpholine, purine (5 and 6 member ring), and their derivatives.

It is contemplated that other denaturants having the attributes of the denaturants of the invention are within the scope of the claimed invention.

It is contemplated that mixtures of the denaturants may be used in the electrophoretic systems of the invention.

The electrophoretic systems of the invention may further include optional, water-miscible non-gelling additives to aid in the dissolution of denaturants where necessary. These may include such cosolvents as dimethylsulfoxide (DMSO), alcohols, or aprotic compounds. Other non-gelling additives include, without limitation, glycerol, other glycols and polyglycols having four or fewer carbon atoms, dextran, locust bean gum, and highly degraded (depolymerized) agarose. Preferred nongelling additives of the invention include glycerol, ethylene glycol, erythritol and locust bean gum, of which glycerol and erythritol are more preferred, and glycerol is most preferred. *See, e.g.,* U.S. Patent No. 5,455,344, the disclosures of which are herein incorporated by reference in their entirety.

The electrophoretic systems of the invention also include buffers. Buffers suitable for practicing the invention include, without limitation, all those that are known as effective in electrophoretic systems. Of particular use in connection with the gels and pre-mix solutions of the invention are tris-borate-EDTA (TBE), tris-phosphate-EDTA, tris-taurine-EDTA, and tris-acetate-EDTA, preferably tris-borate-EDTA or tris-acetate-EDTA, more preferably tris-borate-EDTA, most preferably TBE at the level of "0.5 X," or about 45 mM Tris, 45 mM borate, 1 mM EDTA, pH 8.3. Other useful buffers include carbonate, glycine, and "Good's Buffers," and related zwitterionic compounds. Any such buffers known to those skilled in the art may be used without departing from the spirit of the invention.

The ionization of some denaturants such as amines, acids, and phenols can occur in aqueous solutions. The use of these compounds for electrophoresis requires that they be incorporated into the cathodic and anodic buffers to prevent depletion of the denaturants in the gel during electrophoresis. Alternatively, a buffer system can be formulated that incorporates the denaturant as part of the buffer. Moreover, electrophoresis can be performed at a pH at which ionization of the denaturants does not occur. It is also contemplated the denaturants may be soaked into the gel after the gel is cast. Persons skilled in the art can determine the appropriate conditions.

The gels of the invention can be prepared according to methods known in the art, such as those disclosed in United States Patent Nos. 5,455,344 and 5,219,923, the disclosures of which are herein incorporated by reference in their entirety.

For example, polysaccharide gels of the invention can be prepared by mixing buffer salts, such as TBE in water to yield a solution having a pH of about 8.3. Agarose powder and glycerol are then added to the solution and held at room temperature for about 10 minutes without agitation. The mixture is then measured for weight and boiled with occasional agitation for about 10 minutes. Water is added to replace any lost by evaporation and then the mixture is held at 60°C and the remaining ingredient(s), including the denaturants of the invention, are added. The mixture is then thoroughly mixed and covered and held at 90°C for 30 to 40 minutes except when certain volatile denaturants are used, in this case the mixture is held at a lower temperature for a longer time, adjusted according to the volatility and the solubility of the denaturants. Persons skilled in the art could readily determine the appropriate conditions and such conditions may be used without departing from the spirit of the invention. The solution is then cast into an electrophoresis cassette using techniques well known to those skilled in the art.

When preparing polysaccharide-based gels according to the invention, the amount of gel-forming polysaccharides present is about 2 to about 10 wt. %, about 2 to about 8 wt. % being preferred, about 3 to about 6 wt. % being most preferred, all weights based on the total weight of the composition.

The total denaturant concentration of the electrophoretic system can be about 2 to about 95 wt. %, preferably about 2 to about 70 wt. %, most preferably about 4 to about 60 wt. %, all weights based on the total weight of the composition. It is also contemplated the denaturants may be soaked into the gel after the gel is cast.

If non-gelling additives are used in the electrophoretic media, the total amount of non-gelling additives present is about 0 to about 50 wt. %, about 2 to about 30 wt. % being preferred, about 5 to about 20 wt. % being most preferred, all weights based on the total weight of the composition.

The concentration of buffer can be any level known in the art, and is subject to the same set of tradeoffs as in any other electrophoresis gel, namely: higher concentrations are better for buffering long runs, but lower concentrations are preferable for minimizing Joule heating. A useful level for the polysaccharide gel systems of this invention is between about 10 and 200 mM of cation or anion, whichever is less; with about 20 to 100 mM being preferred, about 30 to 90 mM being more preferred, and about 45 to 90 mM being most preferred. The total weight of buffer salts in the inventive composition is thus about 0.2 to about 6 wt. %, preferably about 0.3 to about 5 wt. %, most preferably about 0.4 to about 4 wt. %, all weights % based on the total weight of the composition.

The pH can be any which is suitable for electrophoretic separation of nucleic acids. In principle, this includes the range of pH 2 to 11. In practice, neutral to mildly alkaline buffers (pH 6.8 to 10) are preferred, to avoid the possibility of depurination or of hydrolysis of nucleic acid. More preferred pH ranges are about 7 to 9, and especially preferred pH ranges are about 8 to 9.

Acrylamide-based gels can be prepared, for example, by methods such as those disclosed in United States Patent No. 5,219,923, the disclosures of which are herein incorporated by reference in their entirety.

Generally, the gels are prepared by mixing TBE buffer with water, to yield a solution having a pH of about 8.3. To this solution the desired monomer(s) and crosslinker(s) are added and the solution is mixed until these components are dissolved. The solution may then be deaerated as desired. The denaturant is added and the solution thoroughly mixed until dissolved. Appropriate catalysts and initiators may then be added to the mixture. The resultant solution is cast into an electrophoresis cassette for polymerization using methods known to those skilled in the art.

When preparing acrylamide-based gels according to the invention, the amount of gel-forming acrylamide or acrylamide derivatives present is about 2 to about 30 wt. %, about 2 to about 12 wt. % being preferred, about 4 to about 11 wt. % being most preferred, all weights based on the total weight of the composition. Monomers suitable for practicing the invention include, without limitation, N,N-dimethylacrylamide, N-methylacrylamide, N-methyloylacrylamide, N-acryloylaminoethoxyethanol, acrylamide, and combinations thereof.

The relative amounts of monomer and crosslinking agent used will vary with the application in which the gel is to be used. Generally, the crosslinking agent can be employed in an amount of about 0.25 to about 30 wt. %, preferably about 0.5 to about 20 wt. %, most preferably about 0.75 to about 15 wt. %, all weights based on the total weight of the monomer and crosslinking agent. Crosslinkers suitable for practicing the invention include, without limitation, bisacrylamide, bisacrylamide methylether, tetraethylene glycol diacrylate, piperazine diacrylamide, N,N'-bisacrylylcystamine, N,N'-diallylytartardimide, N-acryloyl tris(hydroxymethyl) aminomethane N-methyloylacrylamide, and combinations thereof. Preferred cross-linkers are bisacrylamide, bisacrylamide methylether, N,N'-bisacrylylcystamine and combinations thereof.

The crosslinking polymerization reaction is generally carried out in an aqueous medium and can be initiated by known initiators and/or polymerization catalysts. Suitable free radical-providing initiators for practicing the invention include, without limitation, ammonium persulfate (APS), various initiators known to those skilled in the art, and combinations thereof, with APS being preferred. Polymerization catalysts suitable for practicing the invention include, without limitation, N,N,N',N'-tetramethylethylene-diamine (TEMED) or other catalysts suitable for use with photoinitiators. A variety of suitable combinations of initiators and catalysts for photopolymerization are disclosed in D.F. Eaton, *Advances in Photochemistry,* (1986) *13,* 427-487, the disclosures of which are herein incorporated by reference in their entirety. The amount and type of catalyst and initiator is generally indicated by the nature and concentrations of the monomer and crosslinkers used. The optimum amount of catalyst is also affected by the presence of any accompanying impurities. Generally speaking, however, the catalyst can be employed in the amount of about 0.1 to about 5 wt. % based on the total weight of the monomer and crosslinking agent. The preferred initiator and catalyst system is APS and TEMED. The conditions associated with the buffers, denaturants, non-gelling additives, and pH are as described above in connection with the polysaccharide-based systems.

In contrast to crosslinked polymeric gels, capillary and micro-channel electrophoresis employ linear polymer systems. These techniques may use fused silica capillary tubes that have inner diameter between about 10 to 200 microns, or channels that have an inner diameter of up to about 2mm, and which can range in length between about 5 to about 100 cm. Methods for preparing such electrophoretic systems are disclosed in United States Patent No. 5,374,527, the disclosures of which are herein incorporated by reference in their entirety. When the denaturants of the invention are to be used in non-gelling type electrophoresis techniques, such as capillary or micro-channel the denaturants may simply be mixed into the polymer solution before its introduction into the capillary.

When preparing non-gelling media the amount of polymer present is about 0.001 % wt. % to about 10 wt. %, about 0.01 to about 8 wt. % being preferred, and about 0.5 to about 6 wt. % being most preferred, all weights based on the total weight of the composition, .

The conditions associated with the buffers, denaturants, non-gelling additives, and pH are as described above in connection with the polysaccharide-based systems.

Preferred denaturants for use in polysaccharide-based electrophoretic systems include a combination of dimethylsulfoxide and benzyl alcohol, pyridine, N-cyclohexanol, tetrahydrofurfuryl alcohol, cyclohexyl pyrrolidone, hydroxyethyl pyrrolidone, sec-butanol, tert-butanol, sulfolane, and sulfolene. Preferred denaturants for use in acrylamide-based electrophoretic systems include N-ethyl-2-pyrrolidone, 2-pyrrolidone and 1-methyl-2-pyrrolidone. The latter two are more preferred with 1-methyl-2-pyrrolidone being most preferred.

Certain preferred polysaccharide gels comprise about 5.5 wt. % agarose, about 20 wt.% tetrahydrofurfuryl alcohol, about 9 wt.% glycerol in 0.5 X TBE. Other preferred gels comprise about 5 wt.% agarose, about 4 wt.% cyclohexanol, about 28 wt.% dimethylsulfoxide, in 0.5 X TBE, and about 9 wt.% glycerol. A particularly preferred gel of the invention, comprises about 5.5 wt.% agarose, about 8 wt.% benzyl alcohol, about 28 wt.% dimethylsulfoxide, in 0.5 TBE, and about 9 wt.% glycerol.

Certain preferred acrylamide-based gels comprise about 9.5 wt.% acrylamide, about 0.5 wt.% bisacrylamide, about 20 wt. % tetrahydrofurfuryl alcohol in 0.5 X TBE, and about 0.03 wt.% each of APS and TEMED. Other preferred gels comprise about 9.5 wt.% acrylamide, about 0.5 wt.% bisacrylamide, about 4 wt.% N-cyclohexyl-2-pyrrolidone in 0.5 X TBE, and 0.03 wt.% each of APS and TEMED. Other preferred gels comprise about 5.7 wt.% acrylamide, about 0.3 wt.% bisacrylamide, about 15 wt.% 2-pyrrolidone, in 0.5 X TBE, and 0.03 wt.% each of APS and TEMED. Other preferred acrylamide-based gels comprise about 5.7 wt.% acrylamide, about 0.3 wt.% bisacrylamide, about 5 wt.% N-hydroxyethyl-2-pyrrolidone, in 0.5 X TBE, and 0.03 wt.% each of APS and TEMED. Other preferred acrylamide-based gels comprise about 5.7 wt.% acrylamide, about 0.3 wt.% bisacrylamide, about 6 wt.% 3-sulfolene, in 0.5 X TBE, and 0.03 wt.% each of APS and TEMED. Other preferred acrylamide-based gels comprise about 6.7 wt.% N,N-dimethylacrylamide, about 0.3 wt.% bisacrylamide methylether, about 25 wt.% 2-pyrrolidone, in 0.5 X TBE, and about 0.05 wt.% APS and about 0.07 wt. % TEMED. Another preferred gel comprises about 7.7 wt.% N,N-dimethylacrylamide, about 0.3 wt. % bisacrylamide methylether, about 0.25 wt. % 1-methyl-2-pyrrolidone, in 0.5 X TBE, and about 0.05 wt.% APS and about 0.07 wt. % TEMED. Other preferred gels comprise about 9.6 wt.% N,N-dimethylacrylamide, about 0.4 wt. % bisacrylamide methylether, about 25 wt. % 1-methyl-2-pyrrolidone, in 0.5 X TBE, and about 0.05 wt.% APS and about 0.07 wt. % TEMED.

A particularly preferred acrylamide gel of the invention comprises about 6 to about 10 wt.% acrylamide:bis at 19:1 weight ratio in 0.5 X THE, about 4 wt.% N-cyclohexyl-2-pyrrolidone in 0.5 X TBE. Another particularly preferred acrylamide gel of the invention comprises abut 6 to about 10 wt.% N,N-dimethylacrylamide, about 0.3-0.4 wt. % bisacrylamide methylether, about 25 wt.% 1-methyl-2-pyrrolidone, in 0.5 X TBE, and about 0.05 wt.% APS and about 0.07 wt. % TEMED.

One series of test results with certain acrylamide gels and a combination of the following denaturants: 4-(2-hydroxyethyl) morpholine (20 wt.%), tetrahydro-2-pyrimidine (8 wt.%), 4-(-cyclopenten-1-yl) morpholine (6 wt.%), cyclohexyl amine (6 wt.%), quinoline N-oxide hydrate (10 wt.%), 2-pyrrolidone-5-carboxylic acid (6 wt.%) 3-[N-morpholino] propanesulfonic acid (5 wt.%), 2-ethyl imidazole (15 wt.%), 1,2-dimethyl imidazole (15 wt.%), polyvinyl pyrrolidone (M.W. 40,000) (4 wt.%), and benzyl alcohol (4 wt.%) yielded unsatisfactory results *(e.g.,* the electrophoretic medium would not gel properly). It is believed that this is a function of the particular gel and could be modified by one skilled in the art to correct the problem.

One series of test results with the Long Ranger gel (supplied by FMC Corp.) in combination with the following denaturants 4-(2-hydroxyethyl) morpholine (20 wt.%), tetrahydro-2-pyrimidine (8 wt.%), 4-(1-cyclopenten-1-yl) morpholine (6 wt.%), cyclohexyl amine (6 wt.%), quinoline N-oxide hydrate (10 wt.%), 2-pyrrolidone-5-carboxylic acid (6 wt.%), 2-pyrrolidone propanesulfonic acid (20 wt.%), 2-methylimidazole (15 wt.%), 1-methylimidazole (15 wt.%), 2-imidazolidone (15 wt.%), imidazole (15 wt.%), N-ethyl-2-pyrrolidone (15 wt.%), 2-ethyl imidazole (15 wt.%), 1,2,dimethyl imidazole (15 wt.%), butyl-2-pyrrolidone-5-carboxylate (15 wt.%), polyvinyl pyrrolidone (M.W. 40,000) (4 wt.%) yielded unsatisfactory results. It is believed that this is a function of the particular gel and could be modified by one skilled in the art to correct this problem.

The present invention also includes a method for the electrophoretic analysis of biological macromolecules comprising the steps of: (a) exposing the macromolecules to an electrophoretic medium comprising one or more denaturants having an L value of at least 2; and (b) subjecting the macromolecules to an electrophoretic technique, provided that the denaturant is not n-butanol or dimethylsulfoxide alone (DMSO may be used as a cosolvent as discussed *supra*)and provided that when the electrophoretic medium comprises a polysaccharide-based system, the denaturant is not pyrrolidone or C₁-C₆ alkylpyrrolidone and when the electrophoretic medium comprises an acrylamide-based gel system, the denaturant is not benzyl alcohol. The present invention further includes a kit for performing high resolution electrophoretic separations of macromolecules comprising: (a) one or more electrophoretic buffers; (b) one or more denaturants having an L of at least 2; and (c) components for preparing an electrophoretic separation matrix. the electrophoretic media including denaturants are described *infra.*

The following examples are intended for illustrative purposes and are in no way intended to limit the scope of the claimed invention.

### EXAMPLES

### Example 1

### Preparation of Polysaccharide Gels Containing Denaturants

### Reagents and supplies

Materials and their commercial sources include: urea (Fluka); formamide (Fluka); glycerol (Sigma Chemical Co.); Tris-base (Sigma); boric acid (Sigma), disodium EDTA (Sigma); dimethyl sulfoxide (DMSO) (Aldrich); cyclohexanol (Aldrich); benzyl alcohol (Aldrich); tetrahydrofurfuryl alcohol (Sigma); all in A.C.S. grade purity or higher. Agarose sources were, *Pterocladia* agarose, or SeaKem® Gold agarose (FMC BioProducts) or any other high gel strength agaroses which could be used interchangeably.

### Gel preparation

Gels were prepared using the components listed in the following Tables. First, Tris-base, boric acid, disodium EDTA were dissolved in water. The resulting solution was around pH 8.3. Agarose powder and glycerol were then added to the solution and held at room temperature for about 10 minutes without agitation. The mixture was measured for weight and boiled with occasional agitation for 10 minutes. Water was replenished to replace what was lost by evaporation. The mixture was held at 60°C and the remaining ingredient(s) were added. If the remaining ingredients were solutions, they too were heated to 60°C before mixing. The mixture was thoroughly mixed and the vessel was covered and held at 70°C for about 10 minutes when the solution contained urea, and otherwise at 90°C for 30 to 40 minutes. The solution was then cast into an electrophoresis cassette. All % refer to % by weight, based on the total weight of the composition.

| Comparative Gel I (Harper Patent) | |
|---|---|
| water | to 100% |
| urea | 24.02 % |
| agarose | 5.5 % |
| glycerol | 5.0 % |
| TBE | 0.5 X |

| Comparative Gel II (Harper Patent) | |
|---|---|
| water | to 100% |
| formamide | 38.14% |
| agarose | 5.5 % |
| glycerol | 9.0% |
| TBE | 0.5 X |

| Comparative Gel III (Harper Patent) | |
|---|---|
| water | to 100% |
| dimethyl sulfoxide | 27.6 % |
| agarose | 5.5 % |
| glycerol | 9.0% |
| TBE | 0.5 X |

| Gel IV (Invention) | |
|---|---|
| water | to 100% |
| benzyl alcohol (L=3.0) | 8.0% |
| agarose | 5.5 % |
| glycerol | 9.0% |
| TBE | 0.5 X |
| dimethyl sulfoxide | 27.6 % |

| Gel V (Invention) | |
|---|---|
| water | to 100% |
| tetrahydrofurfuryl alcohol (L=2) | 20% |
| agarose | 5.5 % |
| glycerol | 9.0% |
| TBE | 0.5 X |

### Example 2

### Gel Electrophoresis Using The Polysaccharide Gels Containing Denaturants

DNA samples were prepared by the USB SEQUENASE 2.0 kit, using dGTP instead of analogs such as 7-deaza-dGTP or dITP. (Topics in DNA Sequencing: Monograph II, *supra*.) To test the denaturing power of gel matrix additives, a DNA template and oligonucleotide primer were chosen that would generate a known sequence compression/inversion when resolved on 6% PAA, 8M urea gels, namely

Primer TAGATGGGCGCATCGTAA plus a template consisting of vector M13mp18 DNA; this combination yields a series of DNA fragments of incremental length including up to Seq. ID No.1: The underlined sequence elements for the M13mp18 DNA template corresponds to the region of ambiguity that results from sequence compression. The better denaturing systems are those able to resolve compressions. Erroneous sequences may be called when denaturation is incomplete (See Figure 1). Samples were loaded onto the gel and electrophoresed at 50-53°C. Gels I, II, and III could not read certain difficult sequences ("compressions"). Gel IV gave the best separation profiles, and 100-270 bases of readable DNA sequence from a short electrophoresis run (See Figure 3). However, the number of readable bases may vary widely depending on the choice of apparatus or the machine used for performing the electrophoresis. The denaturant used in this gel was not sufficiently water soluble and required the presence of a cosolvent such as, but not limited to, DMSO. Those persons skilled in the art will be able to determine appropriate cosolvents when necessary, and any may be used without departing from the spirit of the invention. The denaturation power of the denaturants was evaluated by the ability of the gel to accurately read certain DNA sequence elements which are not accurately read on 6% polyacrylamide, 8M urea gels, i.e., the sequence compression in SEQ ID 1, and to a lesser extent, the resolution of the remainder of the sequence ladder.

| Gel | Denaturant | Resolution of Compression area |
|---|---|---|
| Gel I | Urea, prior art | No |
| Gel II | Formamide, prior art | No |
| Gel III | DMSO 27.6 wt.%), prior art | No |
| Gel IV | Benzyl alcohol (8 wt.%) in DMSO (27.6 wt.%), invention | Yes |
| Gel V | Tetrahydrofurfuryl alcohol (20 wt.%), invention | Yes |

### Example 3

### Denaturants with Polyacrylamide or Other Vinyl Polymers

### Reagents and Supplies

Materials in addition to what was listed in Example 1 include: acrylamide (Sigma Chemical Co.); bisacrylamide (Sigma); Long Ranger DNA sequencing solution (FMC BioProducts); TEMED (Sigma); ammonium persulfate (Sigma); N-cyclohexyl-2-pyrrolidinone (ISP Technologies, Inc), 2-pyrrolidinone (Aldrich); N-ethyl-2-pyrrolidone (Fluka); N-hydroxyethyl-2-pyrrolidone (Fluka); sec-butanol (Aldrich); tert-butanol (Aldrich); sulfolane (Aldrich); 3-sulfolene (Aldrich); 3-[N-morpholino]propane sulphonic acid (Research Organics, Inc.); 5-methoxy-2-pyrrolidinone (Aldrich); 2-(cyclohexyl amino)-ethane sulphonic acid (Aldrich); Polyvinyl pyrrolidone (M.W. 40,000) (Sigma); cyclohexanol (Aldrich); all in A.C.S. grade purity or higher.

### Gel preparation

Gels were prepared with the ingredients listed in the following Tables. Tris-base, boric acid, disodium EDTA were dissolved in water. The resulting solution was around pH 8.3. Acrylamide and bisacrylamide (Gels VI to XIII) or Long Ranger gel solution (Gels XIV and XV) or N,N-dimethylacrylamide and bisacrylamide methylether (Gels XVI to XVIII) were then added to the solution and mixed until dissolved. The denaturant or the denaturant and the cosolvent were added and thoroughly mixed until dissolved. If the temperature of the mixture dropped, the mixture was warmed to room temperature, and then appropriate catalysts and initiators were added. The solution was cast into an electrophoresis cassette. For some gels, it was necessary to let the gel polymerize at elevated temperature for about 9 hours to get a firm gel. Gels were electrophoresed at 45-60°C. All % refer to % by weight, based on the total weight of the composition.

| Comparative Gel VI | |
|---|---|
| water | to 100% |
| urea | 48.04% |
| acrylamide | 5.7% |
| bisacrylamide | 0.3 % |
| ammonium persulfate | 0.03 % |
| TEMED | 0.03 % |
| TBE | see Example 1 |

| Comparative Gel VII | |
|---|---|
| water | to 100% |
| formamide (L=1) | 38.14% |
| acrylamide | 5.7 % |
| bisacrylamide | 0.3 % |
| APS & TEMED | see Gel VI |
| TBE | see Example 1 |

| Gel VIII (Invention) | |
|---|---|
| water | to 100% |
| tetrahydrofurfuryl alcohol (L=2) | 20% |
| acrylamide | 9.50% |
| bisacrylamide | 0.50% |
| APS & TEMED | see Gel VI |
| TBE | see Example 1 |

| Gel IX (Invention) | |
|---|---|
| water | to 100% |
| N-cyclohexyl-2-pyrrolidinone (L>2.7) | 4 % |
| acrylamide | 9.50% |
| bisacrylamide | 0.50% |
| APS & TEMED | see Gel VI |
| TBE | see Example 1 |

| Gel X (Invention) | |
|---|---|
| water | to 100% |
| 2-pyrrolidinone (L=2.4) | 15% |
| acrylamide | 5.7% |
| bisacrylamide | 0.30% |
| APS & TEMED | see Gel VI |
| TBE | see Example 1 |

| Gel XI (Invention) | |
|---|---|
| water | to 100% |
| N-hydroxyethyl-2-pyrrolidone (L>2.7) | 5% |
| acrylamide | 5.7% |
| bisacrylamide | 0.30% |
| APS & TEMED | see Gel VI |
| TBE | see Example 1 |

| Gel XII (Invention) | |
|---|---|
| water | to 100% |
| sulfolane (L>2.3) | 15% |
| acrylamide | 5.7% |
| bisacrylamide | 0.30% |
| APS & TEMED | see Gel VI |
| TBE | see Example 1 |

| Gel XIII (Invention) | |
|---|---|
| water | to 100% |
| sulfolene (L>2.3) | 6% |
| acrylamide | 5.7% |
| bisacrylamide | 0.30% |
| APS & TEMED | see Gel VI |
| TBE | see Example 1 |

| Gel XIV (Invention) | |
|---|---|
| water | to 100% |
| Cyclohexanol (L=2.7) | 4% |
| 50% Long Ranger gel solution | final 5% |
| APS & TEMED | See Gel VI |
| TBE | see Example 1 |

| Gel XV (Invention) | |
|---|---|
| water | to 100% |
| N-cyclohexyl-2-pyrrolidinone (L>2.7) | 4% |
| 50% Long Ranger gel solution | final 7% |
| APS & TEMED | See Gel VI |
| TBE | see Example 1 |

| Gel XVI (Invention) | |
|---|---|
| Water | to 100% |
| (N,N-dimethylacrylamide | 6.69% |
| Bisacrylamide methylether | 0.31% |
| 2-pyrrolidinone (L=2.4) | 25% |
| APS | 0.05% |
| TEMED | 0.07% |
| TBE adjusted to pH 7 with boric acid | See Example 1 |

| Gel XVII (Invention) | |
|---|---|
| Water | to 100% |
| (N,N-dimethylacrylamide | 6.84% |
| Bisacrylamide methylether | 0.16% |
| N-ethyl-2-pyrrolidone (L>2.7) | 25% |
| APS | 0.05% |
| TEMED | 0.07% |
| TBE adjusted to pH 7 with boric acid | See Example 1 |

| Gel XVIII (Invention) | |
|---|---|
| Water | to 100% |
| (N,N-dimethylacrylamide | 7.71% |
| Bisacrylamide methylether | 0.31% |
| 1-methyl-2-pyrrolidinone (L=2.7) | 25% |
| APS | 0.05% |
| TEMED | 0.07% |
| TBE adjusted to pH=7 with boric acid | See Example 1 |

As is shown in Figure 1, polyacrylamide gels containing prior art denaturants formamide or urea (for example, Gel VI) fail to resolve the compression region of Seq. ID No.1. Not only are some of the fragments not resolved from other fragments, but some of the fragments are separated in the wrong order, leading to erroneous sequence information. For the best denaturants of the invention (for example, gels XVI and XVIII), all the fragments of Seq. ID No.1 are resolved and separated in the correct order (for example, Figure 4). For the remaining examples of gels containing denaturants of the invention (gels VIII, IX, XI, XII, XIII XIV XV and XVII), or when the best denaturants of the invention are present at suboptimal concentrations (for example, gel X), fragments in the compression are separated in the correct order, and almost all fragments were resolved, except that the CCGG segment of the compression did not fully resolve the two Cs from one another or the two Gs from one another (for example, Figure 3).

## Claims

1. An electrophoretic composition for resolving biological macromolecules, the composition comprising:
a) about 2 to about 95 % by weight, based on the total weight of the composition, of one or more stable denaturants having an L value of at least 2; and
b) about 2 to about 98% by weight, based on the total weight of the composition, of an electrophoretic medium;
provided that the denaturant is not *n*-butanol or dimethylsulfoxide and when the electrophoretic medium comprises a polysaccharide-based system, the denaturant is not pyrrolidone or C₁-C₆ alkylpyrrolidone.

2. An electrophoretic composition as claimed in claim 1 wherein the electrophoretic medium is selected from the group consisting of polysaccharides, polysaccharide derivatives, acrylamides, and acrylamide derivatives.

3. An electrophoretic composition as claimed in claim 1 or claim 2 wherein the denaturant is selected from the group consisting of substituted aliphatic compounds having between about 1 to about 25 carbon atoms; substituted aromatic compounds having between about 6 to about 25 carbon atoms; substituted aliphatic alcohols having between about 3 to about 25 carbon atoms; unsubstituted aliphatic alcohols having between about 4 to about 25 carbon atoms; substituted aromatic alcohols having between about 7 to about 25 carbon atoms; unsubstituted aromatic alcohols having between about 7 to about 18 carbon atoms; substituted aliphatic acids having between about 4 to about 25 carbon atoms; unsubstituted aliphatic acids having between about 4 to about 18 carbon atoms; substituted aromatic acids having between about 7 to about 25 carbon atoms; unsubstituted aromatic acids having between about 7 to about 18 carbon atoms; substituted or unsubstituted ketones having between about 3 to about 25 carbon atoms; substituted or unsubstituted ethers having between about 4 to about 25 carbon atoms; substituted or unsubstituted ether alcohols having between about 4 to about 25 carbon atoms; substituted or unsubstituted keto-alcohols having between about 4 to about 25 carbon atoms; substituted or unsubstituted aliphatic sulfides having between about 1 to about 25 carbon atoms; substituted or unsubstituted aliphatic sulfones having between about 2 to about 25 carbon atoms; substituted or unsubstituted diols having between about 5 to about 25 carbon atoms; substituted or unsubstituted heterocyclic amines having between about 4 to about 25 carbon atoms; substituted or unsubstituted alkyl pyrrolidones having between about 5 and about 25 carbon atoms; substituted or unsubstituted alkyl pyrrolidones having between about 5 to about 25 carbon atoms in combination with alcohols; substituted or unsubstituted aliphatic sulfoxides having between about 2 to about 20 carbon atoms in combination with alcohols; substituted or unsubstituted cyclic alkyl pyrrolidones having between about 8 to about 30 carbon atoms; substituted or unsubstituted phenols having between about 6 to about 25 carbon atoms; and combinations thereof.

4. An electrophoretic composition as claimed in claim 3 wherein the denaturant is selected from the group consisting of benzyl alcohol, tetrahydrofurfuryl alcohol, N-cyclohexyl-2-pyrrolidone, 2-pyrrolidone, N-ethyl-2-pyrrolidone, N-hydroxyethyl-2-pyrrolidone, sulfolane, sulfolene, cyclohexanol, n-butanol and 1-methyl-2-pyrrolidone.

5. An electrophoretic composition as claimed in claim 3 wherein the substituted aliphatic compounds are alkyl amines; the aliphatic sulfones are alkane-based or alkadiene-based compounds; the aliphatic acids are alkane-based compounds; the aliphatic alcohols are alkane-based compounds; the substituted aliphatic acids are alkane-based compounds; and the heterocyclic amines are pyridine and its derivatives; purine and its derivatives; piperidine and its derivatives; piperidone and its derivatives; alkyl pyrrolidones and their derivatives; piperazine and its derivatives; and morpholine and its derivatives.

6. An electrophoretic composition as claimed in claim 5 wherein the alkyl amines are n-propylamine, n-butylamine, 1-butanamine, diethylenetriamine, di-n-propylamine, and cyclohexylamine; the alkane-based sulfones are dimethyl sulfone, tetramethylene sulfone; the alkadiene-based sulfones are butadiene sulfone; the alkane-based acids are 1-butanoic acid; the alkane-based alcohols are tert-amyl alcohol, isobutyl alcohol, tert-butyl alcohol, sec-butyl alcohol, 2-ethyl-1-hexanol, 2-octanol, 1-pentanol, 1,3,-dimethyl 1-butanol, 2-ethyl-1-butanol, oleyl alcohol, 3-chloropropanol, cyclohexanol; the substituted aromatic compounds are nitrobenzene, aniline, methylaniline, benzyl amine, quinoline, and benzonitrile; the aromatic-based alcohols are benzyl alcohol, phenol, nonyl phenoxy ethanol, 1,3 benzenediol, m-cresol, o-methoxyphenol; the aromatic acids are benzoic acid; the ethers are ethylene glycol monomethyl ether, ethylene glycol monobutyl ether, diethylene glycol monomethyl ether, diethylene glycol monobutyl ether, and 1,4, dioxane; the ether alcohols are tetrahydrofurfuryl alcohol; the ketones are diethyl ketone, methyl isobutyl ketone, mesityl oxide, cyclochexanone, methyl isoamyl ketone, isophorone, acetophenone, di-(isobutyl) ketone; the keto-alcohols are diacetone alcohol; and the heterocyclic amines are pyridine, piperidine, piperidone, methyl piperidine, methylpiperidone, pyrrolidone, hydroxyethyl pyrrolidone, piperazine, hydroxyethyl piperazine, 2-pyrrolidone, N-methyl-2-pyrrolidone, N-ethyl-2-pyrrolidone, N-cyclohexyl-2-pyrrolidone, 5-methoxy-2-pyrrolidone, hydroxyethyl pyrrolidine, morpholine, methyl morpholine, hydroxyethyl morpholine, purine and their derivatives.

7. An electrophoretic composition as claimed in any of the preceding claims wherein the electrophoretic medium comprises a polysaccharide gel.

8. An electrophoretic composition as claimed in claim 7 wherein the polysaccharide gel comprises:
a) about 2 to about 12% by weight, based on the total weight of the composition, of one or more gelling polysaccharides selected from the group consisting of agar, agarose, allyglycidyl agarose, curdlan, hydroxyethyl curdlan, konjac glucomannan, deacetylated konjac glucomannan; and combinations thereof;
b) 0 to about 50% by weight, based on the total weight of the composition, of one or more non-gelling additives;
c) about 0.2 to about 6% by weight, based on the total weight of the composition, of one or more electrophoretic buffers; and
d) water sufficient to 100% by weight.

9. An electrophoretic composition as claimed in claim 8 wherein the polysaccharide is selected from agarose and allylglycidyl hydroxyethyl curdlan and the denaturant is selected from a combination of dimethylsufoxide and benzyl alcohol, pyridien, N-cyclohexanol, tetrahydrofurfuryl alcohol, cyclohexyl pyrrolidone, hydroxyethyl pyrrolidone, sec-butanol, tert-butanol, sulfolane and sulfolene.

10. An electrophoretic composition as claimed in claim 9 wherein the polysaccharide is agarose and the denaturant is a combination of benzyl alcohol and dimethylsulfoxide.

11. An electrophoretic composition as claimed in any of claims 1 to 6 wherein the electrophoretic medium comprises an acrylamide gel and provided that the denaturant is not benzyl alcohol.

12. An electrophoretic composition as claimed in claim 11 wherein the acrylamide gel comprises:
a) about 2 to about 30% by weight, based on the total weight of the composition, of polymeric acrylamides selected from the group consisting of acrylamide, N,N-dimethylacrylamide, N-methylolacrylamide, dimethylpiperazine acrylamide, N,N' diallyltartardiamide, N-acryloylaminoethoxyethanol, N-acryloyl,tris(hydroxymethyl) aminomethane N-methylolacrylamide, and combinations thereof;
b) 0 to about 50% by weight, based on the total weight of the composition, of one or more non-gelling additives;
c) about 0.2 to about 6% by weight, based on the total weight of the composition, of one or more electrophoretic buffers; and
d) water sufficient to 100% by weight.

13. An electrophoretic composition as claimed in claim 11 wherein the acrylamide gel comprises:
a) about 2 to about 30% by weight, based on the total weight of the composition, of polymeric acrylamides selected from monomers selected from acrylamide, N,N-dimethylacrylamide, N-methylolacrylamide and combinations thereof polymerized with a crosslinker selected from N,N'-methylene bisacrylamide, bisacrylamide methylether, N,N'-bisacrylylcystamine and combinations thereof;
b) about 4 to 60% by weight of a denaturant selected from 2-pyrrolidone, 1-methyl-pyrrolidone, N-ethyl-2-pyrrolidone, and dimethylsulfoxide;
c) 5 to about 20% by weight, based on the total weight of the composition, of one or more non-gelling additives;
d) about 0.2 to about 6% by weight, based on the total weight of the composition, of one or more electrophoretic buffers; and
e) water sufficient to 100% by weight.

14. An electrophoretic composition as claimed in claim 13 wherein the polymeric acrylamide is N,N-dimethylacrylamide crosslinked with bisacrylamide methylether and the denaturant is selected from 2-pyrrolidone and 1-methyl-2-pyrrolidone.

15. An electrophoretic composition as claimed in claim 14 wherein the denaturant is 1-methyl-2-pyrrolidone.

16. An electrophoretic composition as claimed in any of claims 1 to 6 wherein the electrophoretic medium is a non-gel.

17. An electrophoretic composition as claimed in claim 16 wherein the non-gel comprises an acrylamide.

18. A precast high resolution electrophoretic gel comprising:
a) about 2 to about 12% by weight, based on the total weight of the composition, of one or more gelling polysaccharides selected from the group consisting of agar, agarose, allylglycidyl agarose, curdlan, hydroxyethyl curdlan, konjac glucomannan, deacetylated konjac glucomannan; and combinations thereof;
b) about 2 to about 95% by weight, based on the total weight of the composition, of one or more stable denaturants having an L value of at least 2; and
c) 0 to about 50% by weight, based on the total weight of the composition, of one or more non-gelling additives;
d) about 0.2 to about 6% by weight, based on the total weight of the composition, of one or more electrophoretic buffers; and
e) water sufficient to 100% by weight.

19. A precast high resolution electrophoretic gel comprising:
a) about 2 to about 30% by weight, based on the total weight of the composition, of polymeric acrylamides selected from the group consisting of acrylamide, N,N-dimethylarcylamide, N-methylolacrylamide, dimethylpiperazine acrylamide, N,N'-diallyltartardiamide, N-acryloylaminoethoxyethanol, N-acryloyl tris(hydroxymethyl) aminomethane, N-methylolacrylamide, and combinations thereof;
b) about 2 to about 95% by weight, based on the total weight of the composition, of one or more stable denaturants having an L value greater than 2; and
c) 0 to about 50% by weight, based on the total weight of the composition, of one or more non-gelling additives;
d) about 0.2 to about 6% by weight, based on the total weight of the composition, of one or more electrophoretic buffers;
e) 0 to about 2% by weight, based on the total weight of the composition, of one of more catalysts;
f) 0 to about 2% by weight, based on the total weight of the composition, of one or more initiators, and
g) water sufficient to 100% by weight.

20. A precast high resolution electrophoretic gel as claimed in claim 18 or 19 wherein the denaturant is selected from the group consisting of substituted aliphatic compounds having between about 1 to about 25 carbon atoms; substituted aromatic compounds having between about 6 to about 25 carbon atoms; substituted aliphatic alcohols having between about 3 to about 25 carbon atoms; unsubstituted aliphatic alcohols having between about 4 to about 25 carbon atoms; substituted aromatic alcohols having between about 7 to about 25 carbon atoms; unsubstituted aromatic alcohols having between about 7 to about 18 carbon atoms; substituted aliphatic acids having between about 4 to about 25 carbon atoms; unsubstituted aliphatic acids having between about 4 to about 18 carbon atoms; substituted aromatic acids having between about 7 to about 25 carbon atoms; unsubstituted aromatic acids having between about 7 to about 18 carbon atoms; substituted or unsubstituted ketones having between about 3 to about 25 carbon atoms; substituted or unsubstituted ethers having between about 4 to about 25 carbon atoms; substituted or unsubstituted ether alcohols having between about 4 to about 25 carbon atoms; substituted or unsubstituted keto-alcohols having between about 4 to about 25 carbon atoms; substituted or unsubstituted aliphatic sulfides having between about 1 to about 25 carbon atoms; substituted or unsubstituted aliphatic sulfones having between about 2 to about 25 carbon atoms; substituted or unsubstituted diols having between about 5 to about 25 carbon atoms; substituted or unsubstituted heterocyclic amines having between about 4 to about 25 carbon atoms; substituted or unsubstituted alkyl pyrrolidones having between about 5 to about 25 carbon atoms in combination with alcohols; substituted or unsubstituted aliphatic sulfoxides having between about 2 to about 20 carbon atoms in combination with alcohols; substituted or unsubstituted cyclic alkyl pyrrolidones having between about 8 to about 30 carbon atoms; substituted or unsubstituted phenols having between about 6 to about 25 carbon atoms; and combinations thereof.

21. A precast high resolution electrophoretic gel as claimed in claim 20 wherein the substituted aliphatic compounds are alkyl amines; the aliphatic sulfones are alkane-based or alkadiene-based compounds; the aliphatic acids are alkane-based compounds; the aliphatic alcohols are alkane-based compounds; the substituted aliphatic acids are alkane-based compounds; and the heterocyclic amines are pyridine and its derivatives; purine and its derivatives; piperidine and its derivatives; piperidone and its derivatives; alkyl pyrrolidones and their derivatives; piperazine and its derivatives; and morpholine and its derivatives.

22. A precast high resolution electrophoretic gel as claimed in claim 21 wherein the alkyl amines are n-propylamine, n-butylamine, 1-butanamine, diethylenetriamine, di-n-propylamine, and cyclohexylamine; the alkane-based sulfones are dimethyl sulfone, tetramethylene sulfone; the alkadiene-based sulfones are butadiene sulfone; the alkane-based acids are 1-butanoic acid; the alkane-based alcohols are tert-amyl alcohol, isobutyl alcohol, tert-butyl alcohol, sec-butyl alcohol, 2-ethyl-1-hexanol, 2-octanol, 1-pentanol, 1,3,-dimethyl 1-butanol, 2-ethyl-1-butanol, oleyl alcohol, 3-chloropropanol, cyclohexanol; the substituted aromatic compounds are nitrobenzene, aniline, methylaniline, benzyl amine, quinoline, and benzonitrile; the aromatic-based alcohols are benzyl alcohol, phenol, nonyl phenoxy ethanol, 1,3 benzenediol, m-cresol, o-methoxyphenol; the aromatic acids are benzoic acid; the ethers are ethylene glycol monomethyl ether, ethylene glycol monobutyl ether, diethylene glycol monomethyl ether, diethylene glycol monobutyl ether, and 1,4, dioxane; the ether alcohols are tetrahydrofurfuryl alcohol; the ketones are diethyl ketone, methyl isobutyl ketone, mesityl oxide, cyclochexanone, methyl isoamyl ketone, isophorone, acetophenone, di-(isobutyl) ketone; the keto-alcohols are diacetone alcohol; and the heterocyclic amines are pyridine, piperidine, piperidone, methyl piperidine, methylpiperidone, pyrrolidone, hydroxyethyl pyrrolidone, piperazine, hydroxyethyl piperazine, 2-pyrrolidone, N-methyl-2-pyrrolidone, N-ethyl-2-pyrrolidone, N-cyclohexyl-2-pyrrolidone, 5-methoxy-2-pyrrolidone, hydroxyethyl pyrrolidine, morpholine, methyl morpholine, hydroxyethyl morpholine, purine and their derivatives.

23. A precast high resolution electrophoretic gel as claimed in claim 22 wherein the polysaccharide is agarose, the denaturant is selected from tetrahydrofurfuryl alcohol, a combination of benzyl alcohol and dimethylsufoxide, and a combination of cyclohexanol and dimethylsulfoxide, the buffer is TBE, and the nongelling agent is glycerol.

24. A precast high resolution electrophoretic gel as claimed in claim 23 wherein the denaturant is a combination of benzyl alcohol and dimethylsufoxide.

25. A precast high resolution electrophoretic gel as claimed in claim 22 wherein the acrylamides are acrylamide and bisacrylamide, the denaturant is selected from tetrahydrofurfuryl alcohol, N-cyclohexyl-2-pyrrolidone, N-hydroxyethyl-2-pyrrolidone, sulfolane, 3-sulfolene, the buffer is TBE, the initiator is APS, and the catalyst is TEMED.

26. A precast high resolution electrophoretic gel as claimed in claim 25 wherein the acrylamides are N,N-dimethylacrylamide and bisacrylamide methylether, the denaturant is selected from 2-pyrrolidone, N-hydroxyethyl-2-pyrrolidone, sulfolane, 3-sulfolene, the buffer is TBE, the initiator is APS, and the catalyst is TEMED.

27. A precast high resolution electrophoretic gel as claimed in claim 26 wherein the denaturant is selected from 2-pyrrolidone and 1-methyl-2-pyrrolidone.

28. A premix solution for use in acrylamide-based electrophoretic techniques comprising:
a) about 2 to about 30% by weight, based on the total weight of the composition, of one or more acrylamides selected from the group consisting of N,N-dimethylacrylamide, bisacrylamide methylether, N-methylolacrylamide and bisacrylamide, and combinations thereof;
b) about 0.001 to about 2% by weight, based on the total weight of the composition, of one or more catalysts;
c) about 0.001 to about 2% by weight, based on the total weight of the composition, of one or more initiators;
d) about 2 to about 95% by weight, based on the total weight of the composition, of one or more stable denaturants having an L value greater than at least 2;
e) 0 to about 50% by weight, based on the total weight of the composition, of one or more non-gelling additives;
f) about 0.2 to about 6% by weight, based on the total weight of the composition, of one or more electrophoretic buffers; and
e) water sufficient to 100% by weight.

29. A method as claimed in claim 28 wherein the denaturant has a molecular weight of less than about 400 daltons and is selected from the group consisting of substituted aliphatic compounds having between about 1 to about 25 carbon atoms; substituted aromatic compounds having between about 6 to about 25 carbon atoms; substituted aliphatic alcohols having between about 3 to about 25 carbon atoms; unsubstituted aliphatic alcohols having between about 4 to about 25 carbon atoms; substituted aromatic alcohols having between about 7 to about 25 carbon atoms; unsubstituted aromatic alcohols having between about 7 to about 18 carbon atoms; substituted aliphatic acids having between about 4 to about 25 carbon atoms; unsubstituted aliphatic acids having between about 4 to about 18 carbon atoms; substituted aromatic acids having between about 7 to about 25 carbon atoms; unsubstituted aromatic acids having between about 7 to about 18 carbon atoms; substituted or unsubstituted ketones having between about 3 to about 25 carbon atoms; substituted or unsubstituted ethers having between about 4 to about 25 carbon atoms; substituted or unsubstituted ether alcohols having between about 4 to about 25 carbon atoms; substituted or unsubstituted keto-alcohols having between about 4 to about 25 carbon atoms; substituted or unsubstituted aliphatic sulfides having between about 1 to about 25 carbon atoms; substituted or unsubstituted aliphatic sulfones having between about 2 to about 25 carbon atoms; substituted or unsubstituted diols having between about 5 to about 25 carbon atoms; substituted or unsubstituted heterocyclic amines having between about 4 to about 25 carbon atoms; substituted or unsubstituted alkyl pyrrolidones having between about 5 and about 25 carbon atoms; substituted or unsubstituted alkyl pyrrolidones having between about 5 to about 25 carbon atoms in combination with alcohols; substituted or unsubstituted aliphatic sulfoxides having between about 2 to about 20 carbon atoms in combination with alcohols; substituted or unsubstituted cyclic alkyl pyrrolidones having between about 8 to about 30 carbon atoms; substituted or unsubstituted phenols having between about 6 to about 25 carbon atoms; and combinations thereof.

30. A premix solution as claimed in claim 29 wherein the substituted aliphatic compounds are alkyl amines; the aliphatic sulfones are alkane-based or alkadiene-based compounds; the aliphatic acids are alkane-based compounds; the aliphatic alcohols are alkane-based compounds; the substituted aliphatic acids are alkane-based compounds; and the heterocyclic amines are pyridine and its derivatives; purine and its derivatives; piperidine and its derivatives; piperidone and its derivatives; alkyl pyrrolidones and their derivatives; piperazine and its derivatives; and morpholine and its derivatives.

31. A premix solution as claimed in claim 30 wherein the alkyl amines are n-propylamine, n-butylamine, 1-butanamine, diethylenetriamine, di-n-propylamine, and cyclohexylamine; the alkane-based sulfones are dimethyl sulfone, tetramethylene sulfone; the alkadiene-based sulfones are butadiene sulfone; the alkane-based acids are 1-butanoic acid; the alkane-based alcohols are tert-amyl alcohol, isobutyl alcohol, tert-butyl alcohol, sec-butyl alcohol, 2-ethyl-1-hexanol, 2-octanol, 1-pentanol, 1,3,-dimethyl 1-butanol, 2-ethyl-1-butanol, oleyl alcohol, 3-chloropropanol, cyclohexanol; the substituted aromatic compounds are nitrobenzene, aniline, methylaniline, benzyl amine, quinoline, and benzonitrile; the aromatic-based alcohols are benzyl alcohol, phenol, nonyl phenoxy ethanol, 1,3 benzenediol, m-cresol, o-methoxyphenol; the aromatic acids are benzoic acid; the ethers are ethylene glycol monomethyl ether, ethylene glycol monobutyl ether, diethylene glycol monomethyl ether, diethylene glycol monobutyl ether, and 1,4, dioxane; the ether alcohols are tetrahydrofurfuryl alcohol; the ketones are diethyl ketone, methyl isobutyl ketone, mesityl oxide, cyclochexanone, methyl isoamyl ketone, isophorone, acetophenone, di-(isobutyl) ketone; the keto-alcohols are diacetone alcohol; and the heterocyclic amines are pyridine, piperidine, piperidone, methyl piperidine, methylpiperidone, pyrrolidone, hydroxyethyl pyrrolidone, piperazine, hydroxyethyl piperazine, 2-pyrrolidone, N-methyl-2-pyrrolidone, N-ethyl-2-pyrrolidone, N-cyclohexyl-2-pyrrolidone, 5-methoxy-2-pyrrolidone, hydroxyethyl pyrrolidine, morpholine, methyl morpholine, hydroxyethyl morpholine, purine and their derivatives.

32. A method for the electrophoretic analysis of biological macromolecules comprising the steps of:
a) exposing the macromolecules to an electrophoretic medium comprising one or more denaturants having an L value of at least 2; and
b) subjecting the macromolecules to an electrophoretic technique provided that the denaturant is not *n*-butanol or dimethylsulfoxide, provided that when the electrophoretic medium comprises a polysaccharide-based system, the denaturant is not pyrrolidone or C₁-C₆ alkylpyrrolidone and when the electrophoretic medium comprises an acrylamide-based gel system, the denaturant is not benzyl alcohol.

33. A method as claimed in claim 32 wherein the electrophoretic medium is selected from the group consisting of polysaccharides, polysaccharide derivatives, acrylamides, and acrylamide derivatives.

34. A method as claimed in claim 33 wherein the denaturant is selected from the group consisting of substituted aliphatic compounds having between about 1 to about 25 carbon atoms; substituted aromatic compounds having between about 6 to about 25 carbon atoms; substituted aliphatic alcohols having between about 3 to about 25 carbon atoms; unsubstituted aliphatic alcohols having between about 4 to about 25 carbon atoms; substituted aromatic alcohols having between about 7 to about 25 carbon atoms; unsubstituted aromatic alcohols having between about 7 to about 18 carbon atoms; substituted aliphatic acids having between about 4 to about 25 carbon atoms; unsubstituted aliphatic acids having between about 4 to about 18 carbon atoms; substituted aromatic acids having between about 7 to about 25 carbon atoms; unsubstituted aromatic acids having between about 7 to about 18 carbon atoms; substituted or unsubstituted ketones having between about 3 to about 25 carbon atoms; substituted or unsubstituted ethers having between about 4 to about 25 carbon atoms; substituted or unsubstituted ether alcohols having between about 4 to about 25 carbon atoms; substituted or unsubstituted keto-alcohols having between about 4 to about 25 carbon atoms; substituted or unsubstituted aliphatic sulfides having between about 1 to about 25 carbon atoms; substituted or unsubstituted aliphatic sulfones having between about 2 to about 25 carbon atoms; substituted or unsubstituted diols having between about 5 to about 25 carbon atoms; substituted or unsubstituted heterocyclic amines having between about 4 to about 25 carbon atoms; substituted or unsubstituted alkyl pyrrolidones having between about 5 and about 25 carbon atoms; substituted or unsubstituted alkyl pyrrolidones having between about 5 to about 25 carbon atoms in combination with alcohols; substituted or unsubstituted aliphatic sulfoxides having between about 2 to about 20 carbon atoms in combination with alcohols; substituted or unsubstituted cyclic alkyl pyrrolidones having between about 8 to about 30 carbon atoms; substituted or unsubstituted phenols having between about 6 to about 25 carbon atoms; and combinations thereof.

35. A method as claimed in claim 34 wherein the substituted aliphatic compounds are alkyl amines; the aliphatic sulfones are alkane-based or alkadiene-based compounds; the aliphatic acids are alkane-based compounds; the aliphatic alcohols are alkane-based compounds; the substituted aliphatic acids are alkane-based compounds; and the heterocyclic amines are pyridine and its derivatives; purine and its derivatives; piperidine and its derivatives; piperidone and its derivatives; alkyl pyrrolidones and their derivatives; piperazine and its derivatives; and morpholine and its derivatives.

36. A method as claimed in claim 35 wherein the alkyl amines are n-propylamine, n-butylamine, 1-butanamine, diethylenetriamine, di-n-propylamine, and cyclohexylamine; the alkane-based sulfones are dimethyl sulfone, tetramethylene sulfone; the alkadiene-based sulfones are butadiene sulfone; the alkane-based acids are 1-butanoic acid; the alkane-based alcohols are tert-amyl alcohol, isobutyl alcohol, tert-butyl alcohol, sec-butyl alcohol, 2-ethyl-1-hexanol, 2-octanol, 1-pentanol, 1,3,-dimethyl 1-butanol, 2-ethyl-1-butanol, oleyl alcohol, 3-chloropropanol, cyclohexanol; the substituted aromatic compounds are nitrobenzene, aniline, methylaniline, benzyl amine, quinoline, and benzonitrile; the aromatic-based alcohols are benzyl alcohol, phenol, nonyl phenoxy ethanol, 1,3 benzenediol, m-cresol, o-methoxyphenol; the aromatic acids are benzoic acid; the ethers are ethylene glycol monomethyl ether, ethylene glycol monobutyl ether, diethylene glycol monomethyl ether, diethylene glycol monobutyl ether, and 1,4, dioxane; the ether alcohols are tetrahydrofurfuryl alcohol; the ketones are diethyl ketone, methyl isobutyl ketone, mesityl oxide, cyclochexanone, methyl isoamyl ketone, isophorone, acetophenone, di-(isobutyl) ketone; the keto-alcohols are diacetone alcohol; and the heterocyclic amines are pyridine, piperidine, piperidone, methyl piperidine, methylpiperidone, pyrrolidone, hydroxyethyl pyrrolidone, piperazine, hydroxyethyl piperazine, 2-pyrrolidone, N-methyl-2-pyrrolidone, N-ethyl-2-pyrrolidone, N-cyclohexyl-2-pyrrolidone, 5-methoxy-2-pyrrolidone, hydroxyethyl pyrrolidine, morpholine, methyl morpholine, hydroxyethyl morpholine, purine and their derivatives.

37. A kit for performing high resolution electrophoretic separations of macromolecules comprising:
a) one or more electrophoretic buffers;
b) one or more stable denaturants having an L of at least 2; and
c) components for preparing an electrophoretic separation matrix.

38. A kit as claimed in claim 37 wherein the components of the electrophoretic separation matrix are selected from the group consisting of polysaccharides, polysaccharide derivatives, acrylamides, and acrylamide derivatives.

39. A kit as claimed in claim 38 wherein the denaturant is selected from the group consisting of substituted aliphatic compounds having between about 1 to about 25 carbon atoms; substituted aromatic compounds having between about 6 to about 25 carbon atoms; substituted aliphatic alcohols having between about 3 to about 25 carbon atoms; unsubstituted aliphatic alcohols having between about 4 to about 25 carbon atoms; substituted aromatic alcohols having between about 7 to about 25 carbon atoms; unsubstituted aromatic alcohols having between about 7 to about 18 carbon atoms; substituted aliphatic acids having between about 4 to about 25 carbon atoms; unsubstituted aliphatic acids having between about 4 to about 18 carbon atoms; substituted aromatic acids having between about 7 to about 25 carbon atoms; unsubstituted aromatic acids having between about 7 to about 18 carbon atoms; substituted or unsubstituted ketones having between about 3 to about 25 carbon atoms; substituted or unsubstituted ethers having between about 4 to about 25 carbon atoms; substituted or unsubstituted ether alcohols having between about 4 to about 25 carbon atoms; substituted or unsubstituted keto-alcohols having between about 4 to about 25 carbon atoms; substituted or unsubstituted aliphatic sulfides having between about 1 to about 25 carbon atoms; substituted or unsubstituted aliphatic sulfones having between about 2 to about 25 carbon atoms; substituted or unsubstituted diols having between about 5 to about 25 carbon atoms; substituted or unsubstituted heterocyclic amines having between about 4 to about 25 carbon atoms; substituted or unsubstituted alkyl pyrrolidones having between about 5 and about 25 carbon atoms; substituted or unsubstituted alkyl pyrrolidones having between about 5 to about 25 carbon atoms in combination with alcohols; substituted or unsubstituted aliphatic sulfoxides having between about 2 to about 20 carbon atoms in combination with alcohols; substituted or unsubstituted cyclic alkyl pyrrolidones having between about 8 to about 30 carbon atoms; substituted or unsubstituted phenols having between about 6 to about 25 carbon atoms; and combinations thereof.

40. A kit as claimed in claim 39 wherein the substituted aliphatic compounds are alkyl amines; the aliphatic sulfones are alkane-based or alkadiene-based compounds; the aliphatic acids are alkane-based compounds; the aliphatic alcohols are alkane-based compounds; the substituted aliphatic acids are alkane-based compounds; and the heterocyclic amines are pyridine and its derivatives; purine and its derivatives; piperidine and its derivatives; piperidone and its derivatives; alkyl pyrrolidones and their derivatives; piperazine and its derivatives; and morpholine and its derivatives.

41. A kit as claimed in claim 40 wherein the alkyl amines are n-propylamine, n-butylamine, 1-butanamine, diethylenetriamine, di-n-propylamine, and cyclohexylamine; the alkane-based sulfones are dimethyl sulfone, tetramethylene sulfone; the alkadiene-based sulfones are butadiene sulfone; the alkane-based acids are 1-butanoic acid; the alkane-based alcohols are tert-amyl alcohol, isobutyl alcohol, tert-butyl alcohol, sec-butyl alcohol, 2-ethyl-1-hexanol, 2-octanol, 1-pentanol, 1,3,-dimethyl 1-butanol, 2-ethyl-1-butanol, oleyl alcohol, 3-chloropropanol, cyclohexanol; the substituted aromatic compounds are nitrobenzene, aniline, methylaniline, benzyl amine, quinoline, and benzonitrile; the aromatic-based alcohols are benzyl alcohol, phenol, nonyl phenoxy ethanol, 1,3 benzenediol, m-cresol, o-methoxyphenol; the aromatic acids are benzoic acid; the ethers are ethylene glycol monomethyl ether, ethylene glycol monobutyl ether, diethylene glycol monomethyl ether, diethylene glycol monobutyl ether, and 1,4, dioxane; the ether alcohols are tetrahydrofurfuryl alcohol; the ketones are diethyl ketone, methyl isobutyl ketone, mesityl oxide, cyclochexanone, methyl isoamyl ketone, isophorone, acetophenone, di-(isobutyl) ketone; the keto-alcohols are diacetone alcohol; and the heterocyclic amines are pyridine, piperidine, piperidone, methyl piperidine, methylpiperidone, pyrrolidone, hydroxyethyl pyrrolidone, piperazine, hydroxyethyl piperazine, 2-pyrrolidone, N-methyl-2-pyrrolidone, N-ethyl-2-pyrrolidone, N-cyclohexyl-2-pyrrolidone, 5-methoxy-2-pyrrolidone, hydroxyethyl pyrrolidine, morpholine, methyl morpholine, hydroxyethyl morpholine, purine and their derivatives.
